(19) Europäisches Patentamt
European Patent Office
Office européen des brevets

(11) Publication number: **0 455 817 A1**

(12) # EUROPEAN PATENT APPLICATION published in accordance with Art. 158(3) EPC

(21) Application number: **90916385.9**

(51) Int. Cl.$^{5}$: **G09G 5/08**

(22) Date of filing: **09.11.90**

(86) International application number: **PCT/JP90/01463**

(87) International publication number: **WO 91/07738 (30.05.91 91/12)**

(30) Priority: **20.11.89 JP 301626/89**

(43) Date of publication of application: **13.11.91 Bulletin 91/46**

(84) Designated Contracting States: **DE FR GB**

(71) Applicant: **FANUC LTD.**
**3580, Shibokusa Aza-Komanba Oshinomura**
**Minamitsuru-gun, Yamanashi 401-05(JP)**

(72) Inventor: **SUGIMURA, Hiroshi, FANUC Mansion Harimomi 5-302**
**3536, Shibokusa, Oshinomura**
**Minamitsuru-gun, Yamanashi 401-05(JP)**
Inventor: **TERADA, Tomoyuki, FANUC Mansion Harimomi 5-308**
**3536, Shibokusa, Oshinomura**
**Minamitsuru-gun, Yamanashi 401-05(JP)**
Inventor: **NAGATSUKA, Yoshiharu, FANUC Dai-3 Vira-karamatsu**
**3527-1, Shibokusa, Oshinomura**
**Minamitsuru-gun, Yamanashi 401-05(JP)**

(74) Representative: **Brunner, Michael John et al**
**GILL JENNINGS & EVERY 53-64 Chancery Lane**
**London WC2A 1HN(GB)**

(54) **THREE-DIMENSIONAL CURSOR AND OFF-LINE PROGRAMMING SYSTEM USING THE SAME.**

(57) A three-dimensional cursor for designating the position and attitude of an object or a robot on a graphic screen that displays three-dimensional space, and an off-line programming system using the same cursor. Three line segments (X, Y, Z) that meet at right angles with each other in three-dimensional space are displayed as three line segment cursors on a display screen (1) and are allowed to move in the three-dimensional space, in order to designate three-dimensional position and attitude on the display screen (1) that displays the three-dimensional space. It is therefore possible to designate a position of three-dimensional space on the two-dimensional display screen (1). By designating the position and attitude of the arrangement of the object or the robot using the three-dimensional cursor, it is allowed to easily prepare a program for controlling the robot.

EP 0 455 817 A1

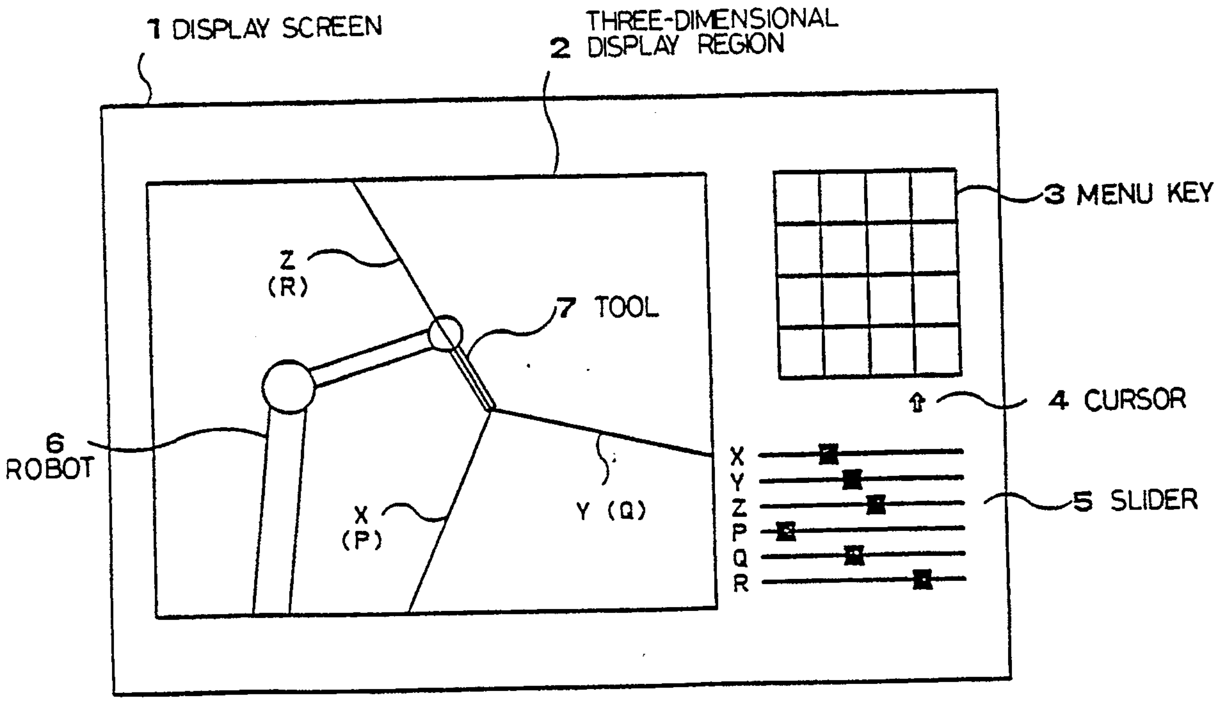
1 DISPLAY SCREEN
2 THREE-DIMENSIONAL DISPLAY REGION
3 MENU KEY
4 CURSOR
5 SLIDER
6 ROBOT
7 TOOL
Z (R)
X (P)
Y (Q)
X
Y
Z
P
Q
R

FIG. 1

## Technical Field

The present invention relates to a three-dimensional cursor for assigning the position and attitude of an object or a robot on a graphic screen indicating a three-dimensional space of an off-line robot programming system or the like, and an off-line programming system using the same.

## Background Art

Recently, an off-line programming system has been introduced such that a program is created, without actually operating a robot, by which the robot is made to perform a desired operation.

According to this off-line programming system, an operation of the robot need not be stopped, so that the productivity can be improved because a movement of the robot during the programming is not restricted, and thus programs can be easily modified. Nevertheless, a requirement must be met that the robot itself, and the work environment or the like, be faithfully displayed on a display screen as a three-dimensional graphic.

Conventionally, when modifying the configuration and position of an object, or the position and attitude of a robot tool, in a work environment represented in a three-dimensional space, numerical values indicating the configuration and position of an object or the position and attitude of a robot tool are input, and the whole three-dimensionally represented screen is renewed on the basis of those numerical values, or a slider is operated so that the whole screen is renewed simultaneously with the slider operation.

A conventional off-line programming technique will now be described with reference to the drawings.

Figures 9 and 10 are diagrams showing an example of a display screen for illustrating the conventional off-line programming system in which the whole screen is renewed simultaneously with the slider operation. In these drawings, all elements such as input keys, other than a display screen 1, have all been omitted.

Displayed on the display screen 1 are a three-dimensional display region 2, in which an outline of a robot 6, a work environment (not shown), etc., are represented in a three-dimensional space, menu keys 3, a cursor 4, and a slider 6.

The menu keys 3 are used to indicate the contents of the display screen 1, and processing contents, etc. The cursor 4, which is moved in response to a mouse operation, is used to assign the menu keys 3 and the like, to thereby select predetermined menus. The slider 5, which controls the position and attitude of a tool 7 at the distal end of the robot 6 in the three-dimensional display region 2, can be moved for a predetermined distance by operating the cursor 4, and corresponding to this movement of the slider 5, the robot 6 and the tool 7 in the three-dimensional display region 2 are moved and the attitudes thereof are changed.

Therefore, when shifting the robot 6 and the tool 7 from the respective positions and attitudes shown in Fig. 9 to the positions and attitudes shown in Fig. 10, a robot position/attitude modification key, among other menu keys 3, is assigned by the cursor 4, and the respective movements of moving axes X, Y and Z of the slider 5 and the respective rotation amounts of rotation axes P, Q and R are then moved to predetermined positions by the cursor 4. Thereafter, the respective positions and attitudes of the robot 6 and the tool 7, along with the whole screen of the three-dimensional region 2, are sequentially renewed, and the position and attitude of the robot assigned by the slider 5 is finally displayed, as shown in Fig. 10.

Therefore, when inputting the numerical values indi cating the configuration and position of the object or the position and attitude of the robot tool, and renewing the whole three-dimensionally represented screen in accordance with those numerical values, the position and attitude in the three-dimensional space must be three-dimensionally constructed mentally, on the basis of the numerical values, and accordingly, the handleability is poor and the intended assignment is difficult, requiring considerable time and skill.

When operating the slider as shown in Fig. 9 so that the whole screen is renewed simultaneously with the slider operation, however, the movement of the target object or the change of attitude of the robot can be visually grasped in the three-dimensional space, and thus the working efficiency becomes higher than in the case of the use of a numerical setting. To display the movement of the object or the modification of the respective positions and attitudes of the robot and the tool simultaneously with the slider operation, however, the whole display screen must be sequentially renewed, little by little, with the slider operation. If the display speed of a display device is low, therefore, the renewal of the screen is slow, and thus the handleability becomes poor.

## Disclosure of the Invention

The present invention has been contrived in consideration of those circumstances, and an object thereof is to provide a three-dimensional cursor with a high handleability, by which the configuration and position of an object or the position and attitude of a robot tool can be visually set and identified in a three-dimensional space, and an off-line programming system using the same.

To sole the above problem, according to the present invention, there is provided a three-dimensional cursor characterized in that three segments intersecting one another at right angles in a three-dimensional space are displayed in the form of a three-segment cursor on a display screen indicating the three-dimensional space, to thus assign a three-dimensional position and attitude on the display screen; the three-segment cursor being moveable in the three-dimensional space.

To solve the above problem, according to the present invention, there is provided moreover an off-line programming system characterized by comprising the creating of a robot control program by assigning the configuration of an object or the position and attitude of a robot by the aforesaid three-dimensional cursor.

Since the display screen indicating the three-dimensional space is obtained by transforming the three-dimensional space into a two-dimensional space at the display screen, a conventional cursor cannot specify a position in the three-dimensional space, although it can specify a position on the display screen as a two-dimensional space. According to the present invention, however, the three segments intersecting one another at right angles in the three-dimensional space are displayed in the form of the three-segment cursor on the display screen, so that the three-segment cursor is moveable in the three-dimensional space, and thus a position in the three-dimensional space can be assigned on the display screen represented by a two-dimensional plane. By assigning the configuration of the object or the position and attitude of the robot by the three-dimensional cursor, moreover, a robot control program can be easily created.

Brief Description of the Drawings

Fig. 1 is a diagram showing an example of a display screen of an off-line programming apparatus according to one embodiment of the present invention;

Figs. 2 and 3 are diagrams showing another example of the display screen of the off-line programming apparatus according to the embodiment of the present invention;

Fig. 4 is a diagram showing an outline of an off-line programming apparatus for displaying a three-dimensional cursor according to the embodiment of the present invention;

Fig. 5 shows a flow chart used in modifying the position and attitude of the three-dimensional cursor of the present embodiment;

Fig. 6 shows a flow chart illustrating a case wherein the position and attitude of a robot are modified corresponding to a modifying of a position and attitude of the three-dimensional cursor;

Fig. 7 shows a flow chart illustrating a case wherein the configuration and position of an object, such as work environment, are modified corresponding to a modifying of a position and attitude of the three-dimensional cursor;

Fig. 8 shows a flow chart for the off-line programming apparatus used where a process to be executed is registered at the end of a movement of the three-dimensional cursor; and

Figs. 9 and 10 are diagrams showing an example of the display screen for illustrating a conventional off-line programming system in which the whole screen is renewed simultaneously with a slider operation.

Best Mode of Carrying Out the Invention

An embodiment of the present invention will now be described with reference to the drawings.

Figure 4 is a diagram showing an outline of an off-line programming apparatus for displaying a three-dimensional cursor according to the one embodiment of the present invention.

A processor 21 controls the operation of the whole apparatus in accordance with a system program stored in a ROM 22. The ROM 22 is formed of an EPROM or EEPROM. A RAM 23, which is formed of a DRAM or the like, temporarily stored various data, data for arithmetic processing, etc.

A processor 24 for floating point arithmetic makes a calculation from a determinant for coordinate transformation between two-dimensional data and three-dimensional data.

A graphic control circuit 25 converts a digital signal into a signal for display, and outputs the signal to a display unit 26. A CRT or liquid crystal display device is used as the display unit 26.

A hard disk 28, having a storage capacity of 140 megabytes or more for storing various data, is controlled by a hard disk controller 27.

An input/output port 29, which is used to input and output the various data, is connected with a keyboard 30, which includes command keys, tenkeys, etc., and a mouse 31 for moving the cursor on a graphic display screen of the display unit 26.

These components are connected to one another by a bus 20.

Figure 1 is a diagram showing an example of a display screen of an off-line programming apparatus according to the embodiment of the present invention. In Fig. 1, like numerals are used to designate the same components as those shown in Fig. 9, and thus a description of those components is omitted. Figures 2 and 3 are diagrams showing another example of the display screen of the off-line programming apparatus according to the embodiment of the present invention.

In the present embodiment, three segments intersecting one another at right angles in a three-dimensional space are displayed as the three-dimensional cursor, which is composed of three segments X, Y and Z of a three-dimensional display region 2 on a display screen 1, to thereby indicate the configuration and position of an object or the position and attitude of a robot tool.

This three-dimensional cursor is composed of the three segments X, Y and Z in a right-hand system. An intersecting point O between the three segments X, Y and Z indicates a three-dimensional position (X, Y, Z), and the directions of the three segments X, Y and Z indicate the directions of X, Y and Z axes, respectively.

In the present embodiment, the segment Z of the three-dimensional cursor coincides with the Z axis of a tool 7. Therefore, if the respective movements of moving axes X, Y and Z of a slider 5 on the display screen 1 and the respective rotation amounts of rotation axes P, Q and R are moved to predetermined position by a cursor 4, the position and attitude of the three-dimensional cursor are displayed on the screen of the three-dimensional display region 2 simultaneously with the operation of the slider 5.

Accordingly, when shifting the position and attitude of the robot shown in Fig. 9 to the position and attitude of the robot shown in Fig. 10, the slider 5 is moved to a predetermined position by the cursor 4, and thereafter, only the three-dimensional cursor indicates the position and attitude shown in Fig. 2.

If this position and attitude are as required, the position and attitude of the robot modified in accordance with the position and attitude of the three-dimensional cursor, assigned as shown in Fig. 3, can be displayed by assigning a robot position/attitude modification key among the menu keys 3 by the cursor 4.

The three-dimensional cursor is displayed independently of the display of the object, the robot 6, and the tool 7 in the display screen 1.

The use of the three-dimensional cursor of the present embodiment leads to a great improvement in the ease of the operation for the assignment of the position and attitude in the three-dimensional space.

The operation of the present embodiment will now be described with reference to the drawings. Figure 5 shows a flow chart used when modifying the position and attitude of the three-dimensional cursor of the present embodiment. In Fig. 5, the numerals suffixed to S indicate step numbers.

[S1] The position and attitude of the three- dimensional cursor are input using the slider or a numeric means.

[S2] A world position with respect to a world coordinate system of the three-dimensional cursor is calculated.

[S3] The position and attitude of the three-dimensional cursor are transformed into a viewing coordinate system in accordance with the world position obtained in S2.

[S4] The position and attitude of the three-dimensional cursor transformed into the viewing coordinate system in S3 are transformed into a display coordinate system of the display unit 26.

[S5] The three-dimensional cursor presently on dis play is erased.

[S6] The three-dimensional cursor transformed into the display coordinate system in S5 is displayed on the display screen 1 of the display unit 26, as shown in Fig. 2.

Although the position and attitude of the three-dimensional cursor are calculated on the basis of the world coordinate system, alternatively it may be calculated on the basis of a coordinate system suitably selected from among all coordinate systems annexed to the object layout displayed on the display screen.

After the modification of the position and attitude of the three-dimensional cursor is thus completed, the process of modifying the position and attitude of the robot 6 of Fig. 2 in the manner shown in Fig. 3 is then executed. Figure 6 shows a flow chart illustrating the case wherein the position and attitude of the robot are modified corresponding to a modifying of the position and attitude of the three-dimensional cursor.

[S7] If the modified position and attitude of the three-dimensional cursor displayed in S6 are determined to be as requires, while the three-dimensional cursor is observed on the display screen 1, a position acquisition key of the three-dimensional cursor is assigned from among the menu keys 3.

Thereafter, the distal end of the tool 7 of the robot 6 defines the position (origin O) of the three-dimensional cursor, and the attitude of the tool 7 defines the direction of the Z axis of the three-dimensional cursor.

[S8] The position and attitude of the tool 7 are calculated and obtained in accordance with the position and attitude of the three-dimensional cursor assigned in S7.

[S9] The attitude of the robot 6 is modified in accordance with the position and attitude of the tool 7 obtained in S8.

[S10] The robot 6 and the tool 7, the positions and attitude of which are modified, are displayed on the display screen 1 as shown in Fig. 3.

Accordingly, by displaying the three-dimensional cursor independently of other display screens, i.e., screens for displaying a work environment and the like, the three-dimensional cursor can be moved at a constant speed regardless of the complexity of the display of the work environment and the like, and the position and attitude can be three-dimensionally identified at a high speed in any display unit without renewing the whole screen thereof. Further, the position and attitude of a robot with a complicated shape can be easily assigned at a high speed, by assigning the position and attitude of the tool 7 of the robot 6 by the three-dimensional cursor.

Although the above-described flow chart is used when modifying the position and attitude of the robot 6, it may be also applied when modifying the configuration and position of the object. Figure 7 shows a flow chart illustrating the case wherein the configuration and position of the object, such as the work environment, are modified corresponding to the modifying of the position and attitude of the three-dimensional cursor.

[S11] If the modified position and attitude of the three-dimensional cursor displayed in S6 are determined to be as required, while the three-dimensional cursor is observed on the display screen 1, the position acquisition key of the three-dimensional cursor is assigned from among the menu keys 3. Thereafter, the reference coordinate system of the object defines the position (origin O) of the three-dimensional cursor, and the reference coordinate system of the object is made to coincide with the X, Y and Z axes of the three-dimensional cursor.

[S12] The position and configuration of the object are calculated in accordance with the position and attitude of the three-dimensional cursor assigned in S7, and the object is relocated.

[S13] The object relocated in S8 is displayed on the display screen 1.

In the embodiment described above, the position and attitude of the tool 7 are obtained, the modified attitude of the robot 6 is displayed, and the relocated position and configuration of the object are displayed, by assigning the position acquisition key of the three-dimensional cursor from among the menu keys 3 if the modified position and attitude of the three-dimensional cursor displayed in S6 are determined to be as required while the three-dimensional cursor is observed on the display screen 1. Alternatively, the modified configuration of the object or attitude of the robot 6 may be automatically displayed when the movement of the three-dimensional cursor is completed.

Figure 8 shows a flow chart for the off-line programming apparatus used where a process to be executed is registered at the end of the movement of the three-dimensional cursor. More specifically, the configuration of the object or the attitude of the robot 6 is automatically modified and displayed upon the completion of the movement of the three-dimensional cursor.

[S14] A robot teaching mode or object locating mode is assigned from among the menu keys 3, by the cursor 4.

[S15] The robot or the object following the movement of the three-dimensional cursor is assigned. When this stop is executed, then the process to be executed is registered upon the completion of the movement of the three-dimensional cursor. Namely, a process is registered such that the assigned position and attitude of the robot or the configuration of the object is displayed as modified in accordance with the position and attitude of the three-dimensional cursor after the completion of the movement of the three-dimensional cursor.

[S16] If the position and attitude of the three-dimensional cursor presently on display do not coincide with the position and attitude of the tool of the robot or the reference coordinates of the object, assigned in S15, the three-dimensional cursor is redisplayed so that these positions and attitudes do coincide. More specifically, if the respective positions and attitudes of the three-dimensional cursor and the tool 7 of the robot 6 do not coincide, as shown in Fig. 2, the position and attitude of the three-dimensional cursor are made to coincide with the position and attitude of the tool 7 of the assigned robot 6, as shown in Fig. 1.

[S17] The three-dimensional cursor newly set in the processes of S1 to S6 of Fig. 1 is displayed on the display screen 1.

[S18] The modified attitude of the robot 6 or configuration of the object is displayed so that the position and attitude of the tool 7 of the robot 6 or the reference coordinates of the object coincide with the position and attitude of the three-dimensional cursor obtained in S17. More specifically, the modified attitude of the robot 6 or the like is automatically displayed, as shown in Figs. 2 and 3, upon the completion of the movement of the three-dimensional cursor in S17. At this time, the completion of the movement of the three-dimensional cursor is discriminated by the state of an operating button of the mouse 31.

[S19] The cursor 4 is operated to cancel the assignment of the robot teaching mode or object locating mode among the menu keys 3, and as a result, the assignment of the robot or the object following the movement of the three-dimensional cursor, made in S15, is canceled, and the process to be executed is deleted upon the completion of the movement of the three-dimensional cursor. On and after this time, therefore, the processing is executed in accordance with the flow chart of Fig. 6 or 7.

The processes of S17 and S18 are repeatedly executed as valid, before the cancellation of the assignment in S19.

Based on the process described above, the three-dimensional cursor can be moved on the display screen 1 so that the configuration of the object or the position and attitude of the robot can be automatically shifted to the position and attitude of the three-dimensional cursor at the end of the movement of the three-dimensional cursor, to be displayed as modified only by operating the cursor 4 at the location of the slider 5. Therefore, the robot attitude/position modification key, among the menu keys, need not be newly assigned, and thus the handleability of the mouse can be improved.

Although the slider 5 displayed on the display screen 1 is used in the embodiment described above, this may be replaced with a control dial device provided as hardware for some off-line programming apparatuses (work stations). Alternatively, this control dial device may be displayed on the display screen 1 so that it can be operated, in the same manner as the slider 5, by the cursor 4.

According to the present invention, as described above, there is provided a three-dimensional cursor with a high handleability, by which the configuration and position of an object or the position and attitude of a robot tool can be visually set and identified in a three-dimensional space. Further, an off-line programming can be easily effected by using this three-dimensional cursor.

## Claims

1. A three-dimensional cursor characterized in that three segments intersecting one another at right angles in a three-dimensional space are displayed in the form of a three-segment cursor on a display screen indicating said three-dimensional space, in order to assign a three-dimensional position and attitude on said display screen, said three-segment cursor being movable in said three-dimensional space.

2. A three-dimensional cursor according to claim 1, characterized in that the intersecting point of said three segments of said three-segment cursor indicates said position, and the respective directions of said three segments of said three-segment cursor indicate said attitude.

3. A three-dimensional cursor according to claim 1, characterized in that said three segments of said three-segment cursor are represented by a right-hand system.

4. An off-line programming system characterized by comprising a creation of a robot control program by assigning a configuration of an object or a position and attitude of a robot by the three-dimensional cursor according to claim 1, 2 or 3.

5. An off-line programming system according to claim 4, characterized in that said three-dimensional cursor is displayed independently of the display of said object and said robot on said display screen.

6. An off-line programming system according to claim 4, characterized in that the position and attitude of said three-dimensional cursor are based on a world coordinate system and a coordinate system selected from among all of the coordinate systems annexed to the object layout dis played on said display screen.

7. An off-line programming system according to claim 4, characterized in that the position and attitude of said three-dimensional cursor are set by one of a slider displayed on said display screen and a control dial.

8. An off-line programming system according to claim 4, characterized in that said three-dimensional cursor is moved on said display screen so that a process to be executed next can be registered when the movement of said three-dimensional cursor is completed.

9. An off-line programming system according to claim 8, characterized in that a process can be registered as said process such that, by previously assigning an object or a robot to follow the movement of said three-dimensional cursor, said assigned configuration of said object or the position and attitude of said robot are displayed as modified in accordance with the position and attitude of said moved three-dimensional cursor when the movement of said three-dimensional cursor on said display screen is completed.

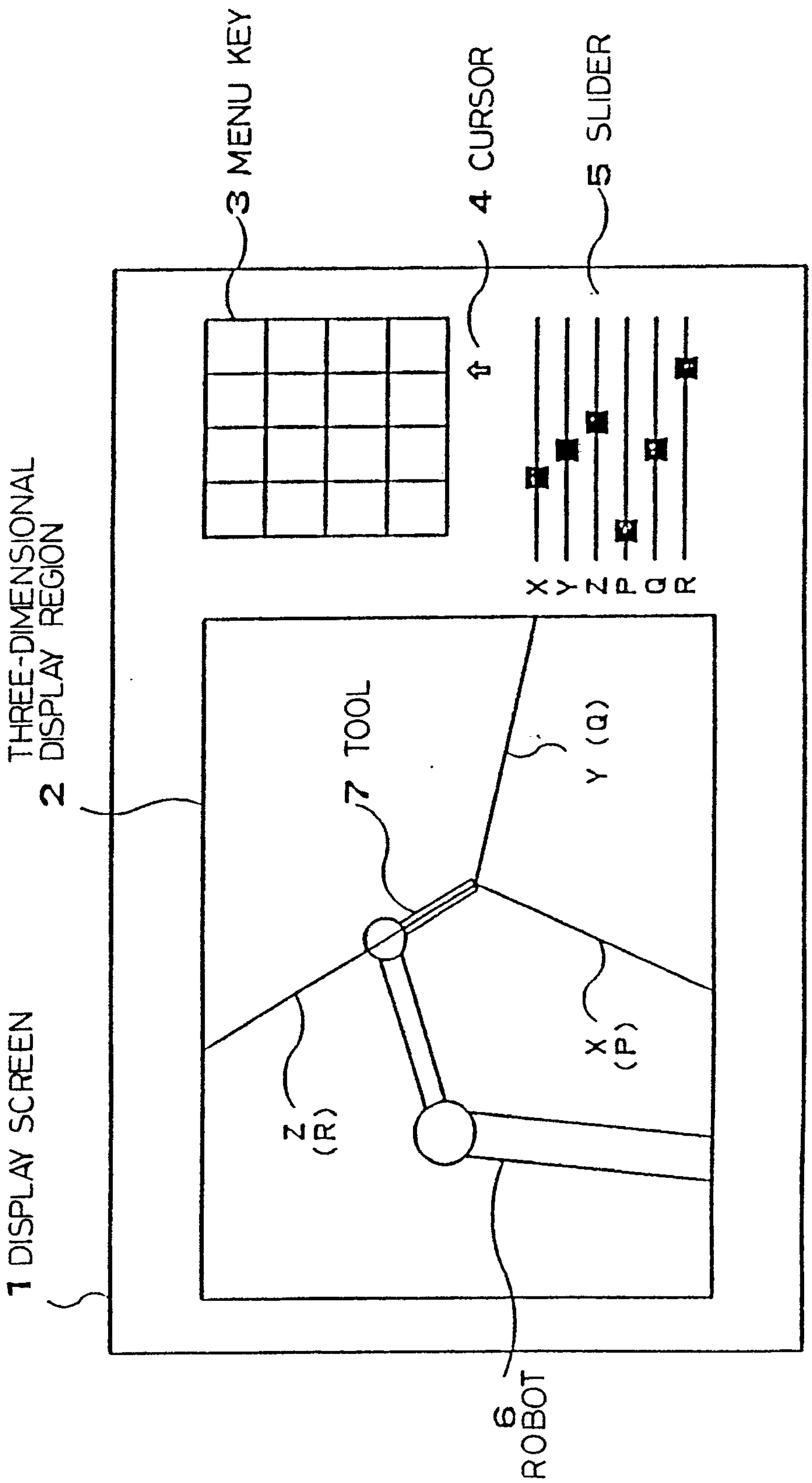
1 DISPLAY SCREEN
2 THREE-DIMENSIONAL DISPLAY REGION
3 MENU KEY
4 CURSOR
5 SLIDER
6 ROBOT
7 TOOL
X Y Z P Q R
X (P)
Y (Q)
Z (R)

FIG. 1

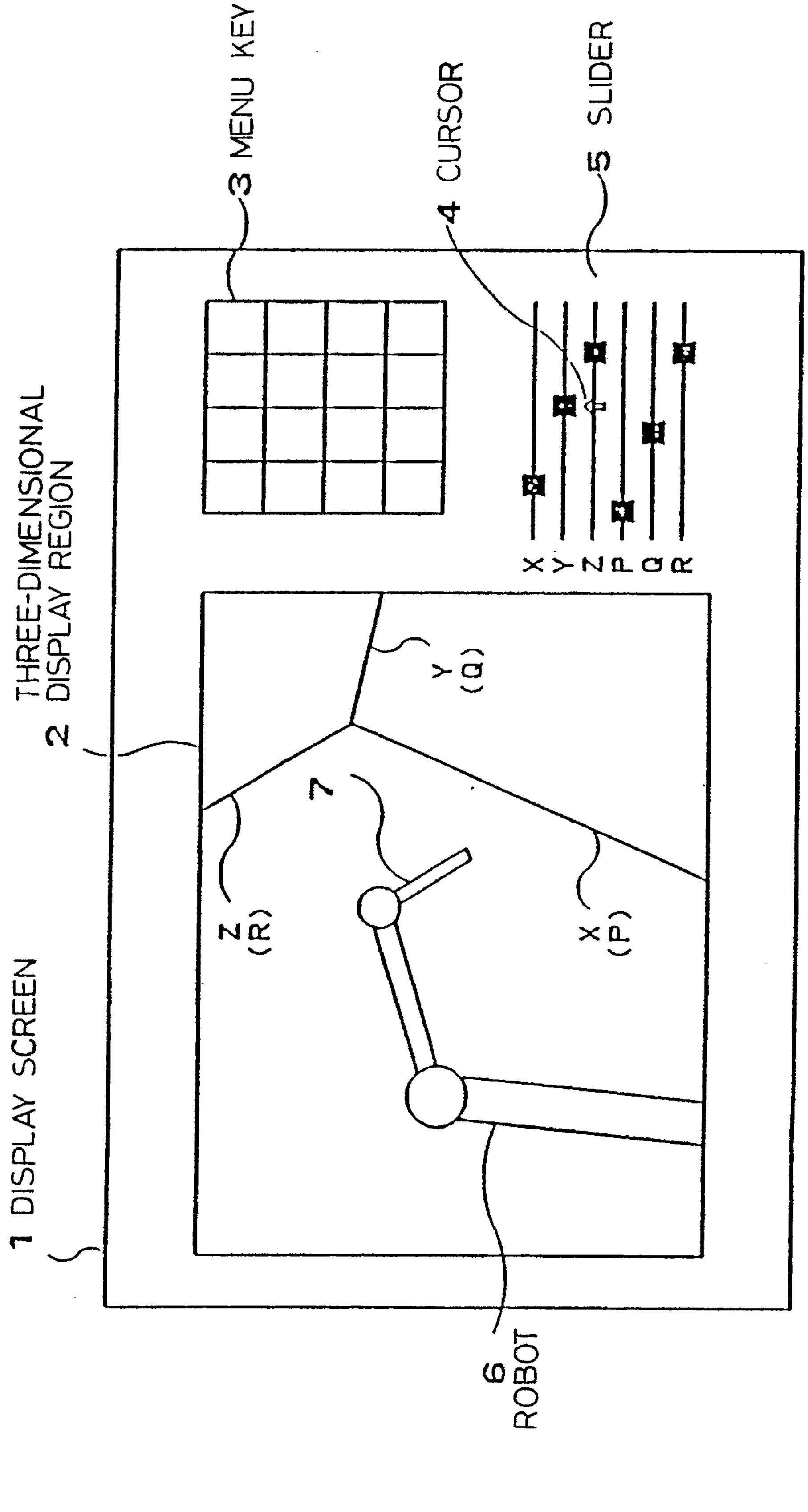
1 DISPLAY SCREEN
2 THREE-DIMENSIONAL DISPLAY REGION
3 MENU KEY
4 CURSOR
5 SLIDER
6 ROBOT
7
X
Y
Z
P
Q
R
Z (R)
Y (Q)
X (P)

FIG. 2

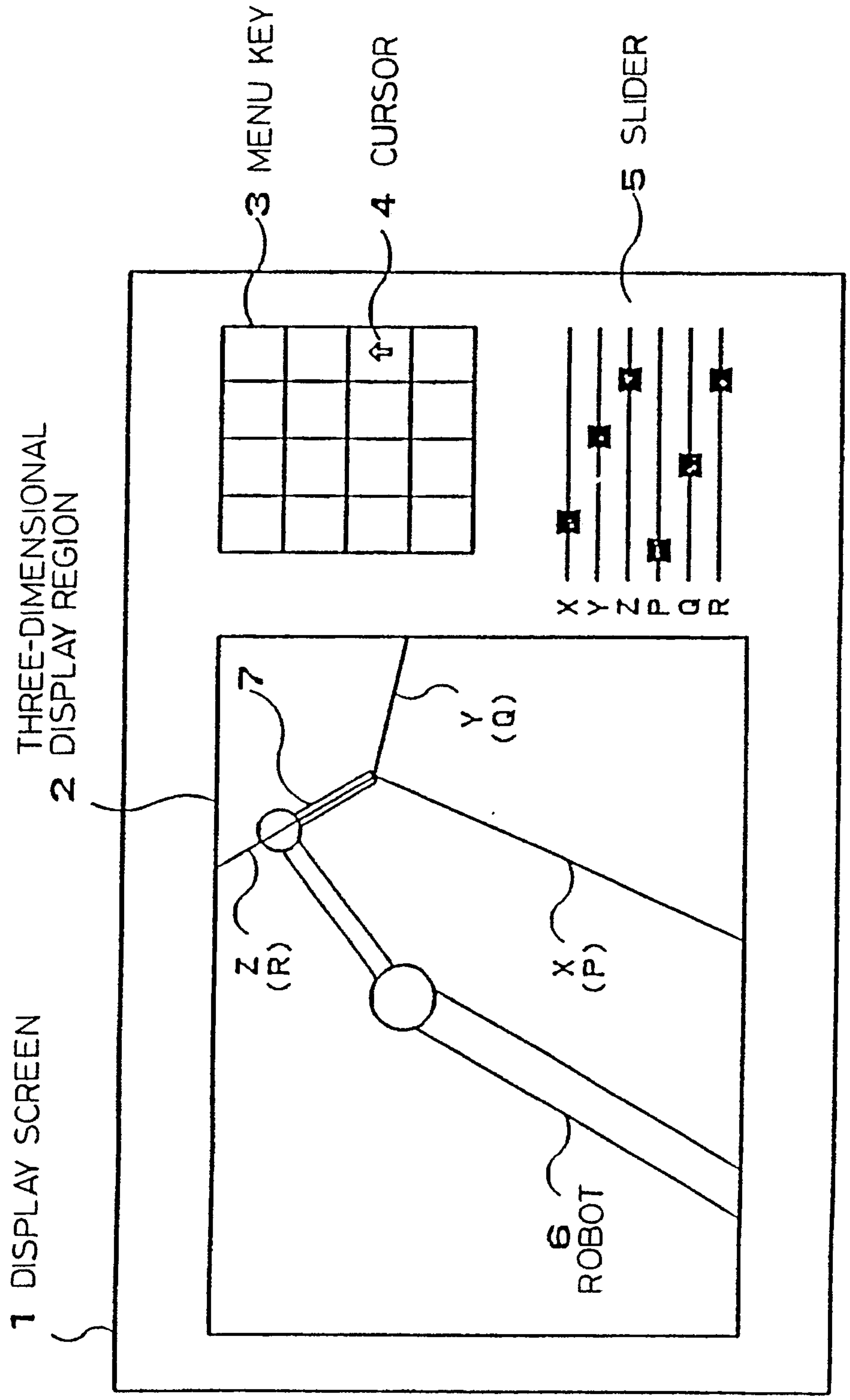

1 DISPLAY SCREEN
2 THREE-DIMENSIONAL DISPLAY REGION
3 MENU KEY
4 CURSOR
5 SLIDER
6 ROBOT
7
X
Y
Z
P
Q
R
Z (R)
X (P)
Y (Q)


FIG. 3

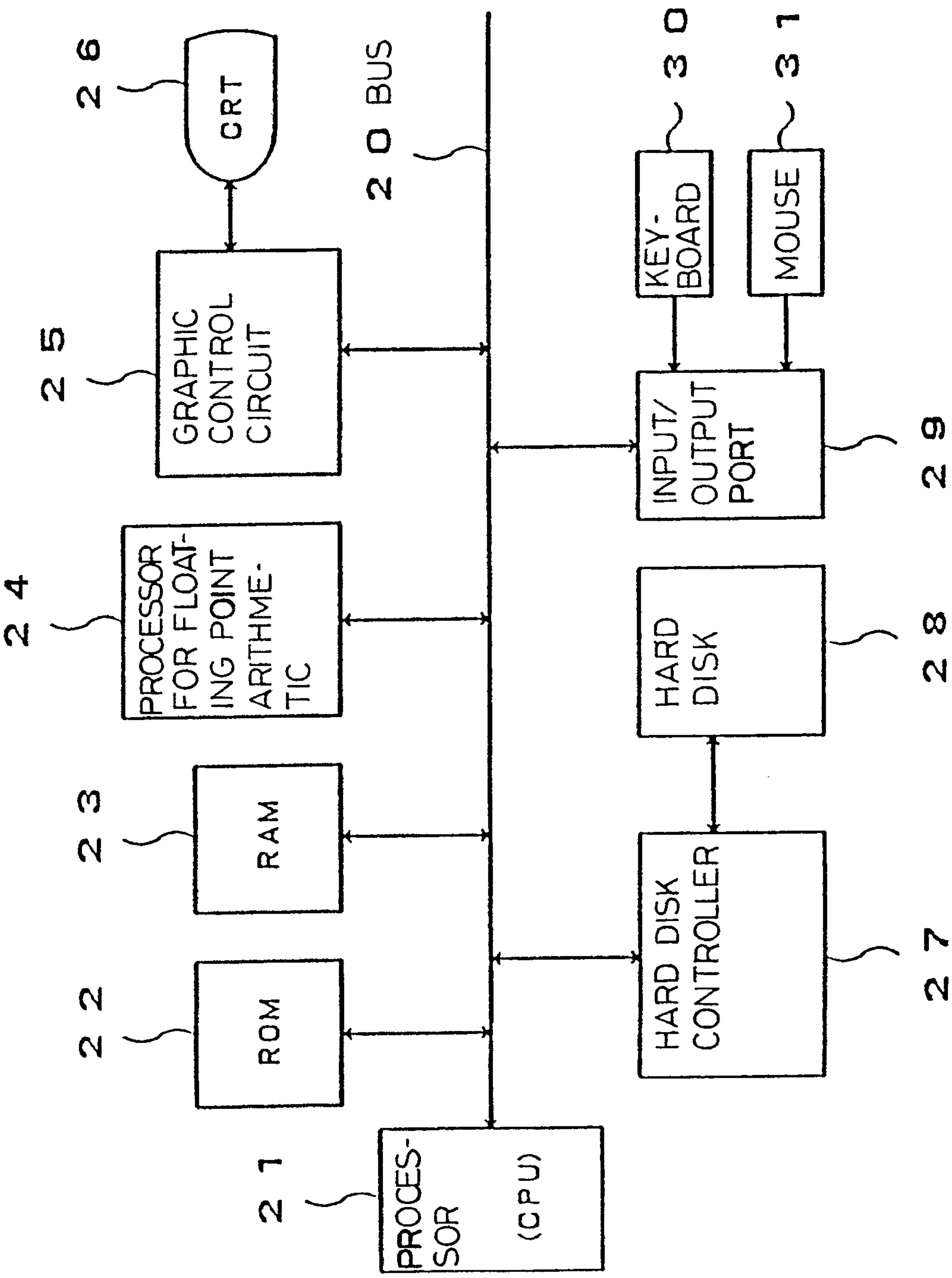
20 BUS
21
PROCESSOR (CPU)
22
ROM
23
RAM
24
PROCESSOR FOR FLOATING POINT ARITHMETIC
25
GRAPHIC CONTROL CIRCUIT
26
CRT
27
HARD DISK CONTROLLER
28
HARD DISK
29
INPUT/ OUTPUT PORT
30
KEY-BOARD
31
MOUSE

FIG. 4

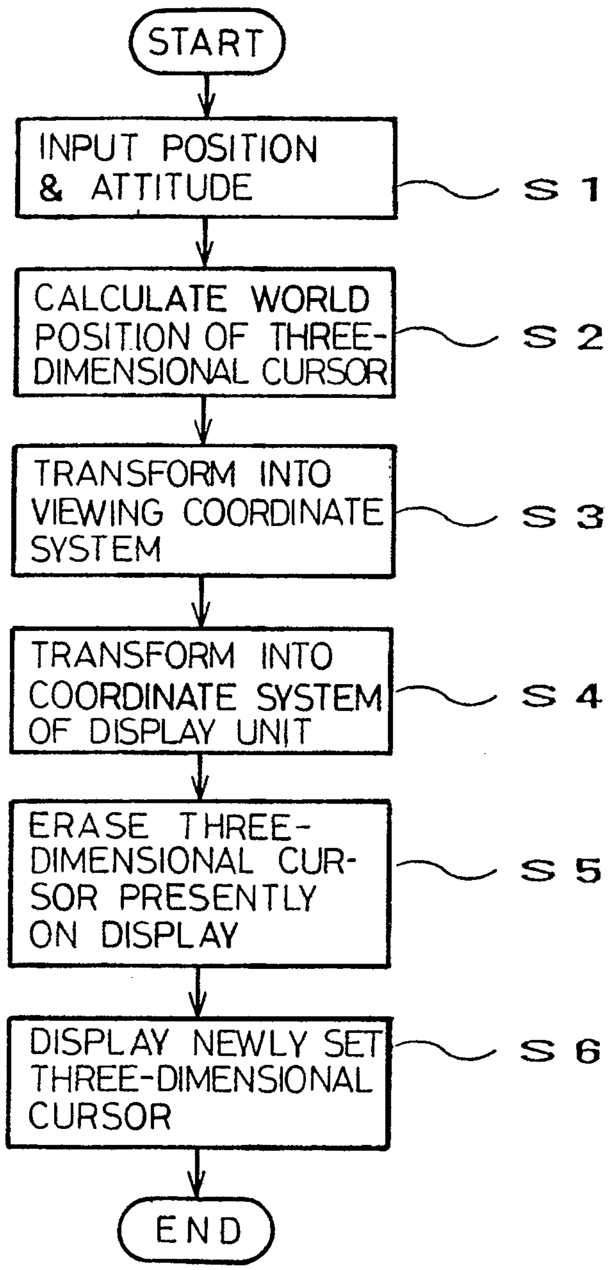
START
INPUT POSITION & ATTITUDE
S1
CALCULATE WORLD POSITION OF THREE-DIMENSIONAL CURSOR
S2
TRANSFORM INTO VIEWING COORDINATE SYSTEM
S3
TRANSFORM INTO COORDINATE SYSTEM OF DISPLAY UNIT
S4
ERASE THREE-DIMENSIONAL CURSOR PRESENTLY ON DISPLAY
S5
DISPLAY NEWLY SET THREE-DIMENSIONAL CURSOR
S6
END

FIG. 5

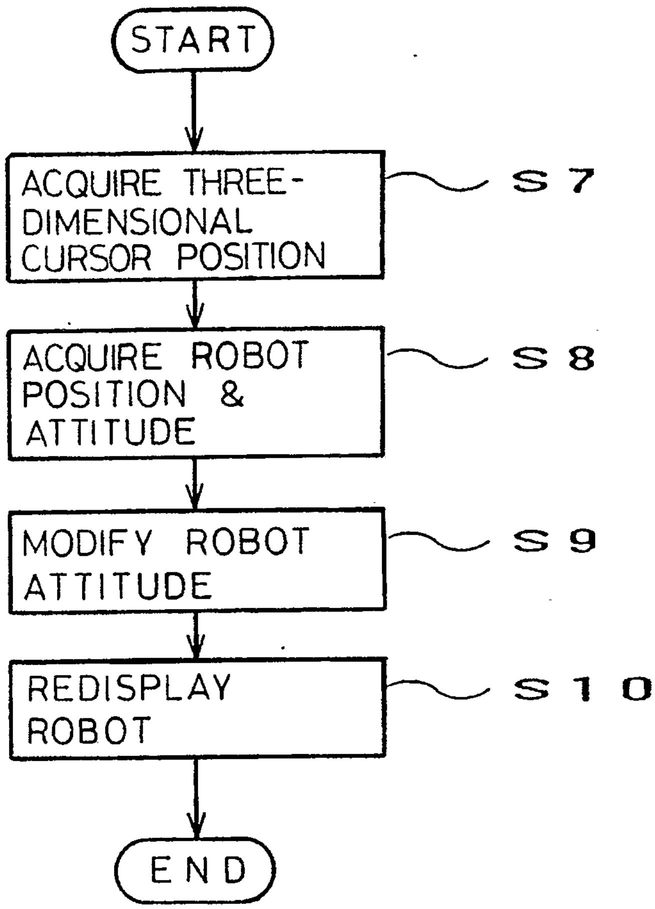
START
ACQUIRE THREE-DIMENSIONAL CURSOR POSITION
S7
ACQUIRE ROBOT POSITION & ATTITUDE
S8
MODIFY ROBOT ATTITUDE
S9
REDISPLAY ROBOT
S10
END

FIG. 6

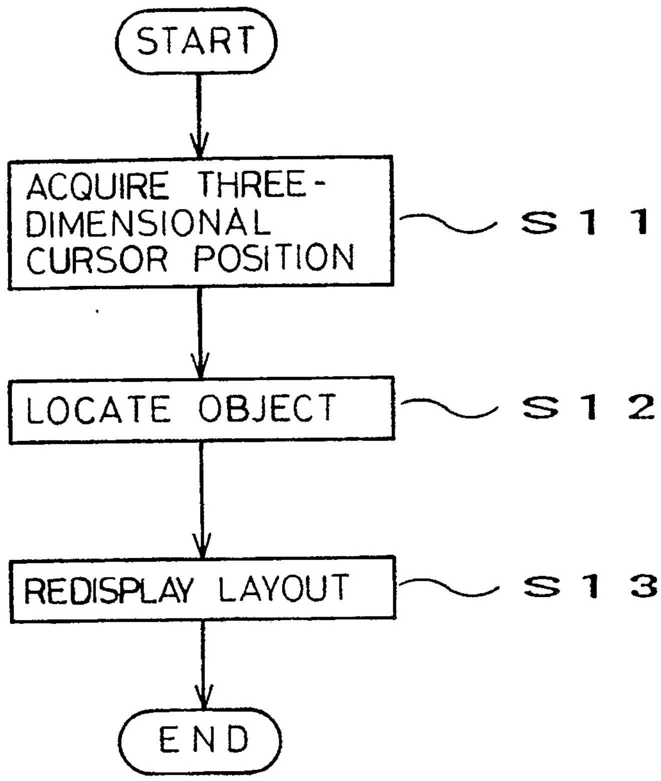
START
ACQUIRE THREE-DIMENSIONAL CURSOR POSITION
S11
LOCATE OBJECT
S12
REDISPLAY LAYOUT
S13
END

FIG. 7

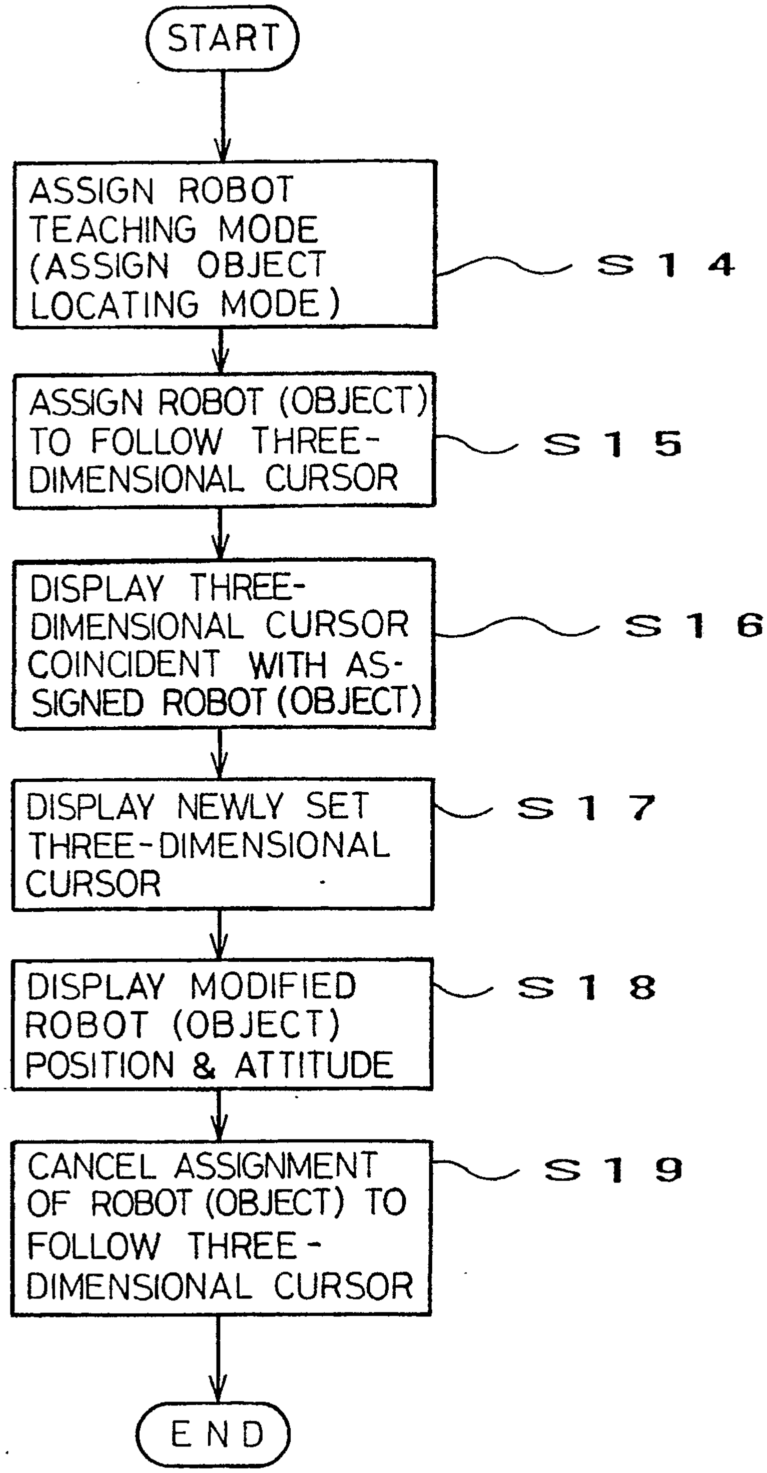
START
ASSIGN ROBOT TEACHING MODE (ASSIGN OBJECT LOCATING MODE)
S14
ASSIGN ROBOT (OBJECT) TO FOLLOW THREE-DIMENSIONAL CURSOR
S15
DISPLAY THREE-DIMENSIONAL CURSOR COINCIDENT WITH ASSIGNED ROBOT (OBJECT)
S16
DISPLAY NEWLY SET THREE-DIMENSIONAL CURSOR
S17
DISPLAY MODIFIED ROBOT (OBJECT) POSITION & ATTITUDE
S18
CANCEL ASSIGNMENT OF ROBOT (OBJECT) TO FOLLOW THREE-DIMENSIONAL CURSOR
S19
END

FIG. 8

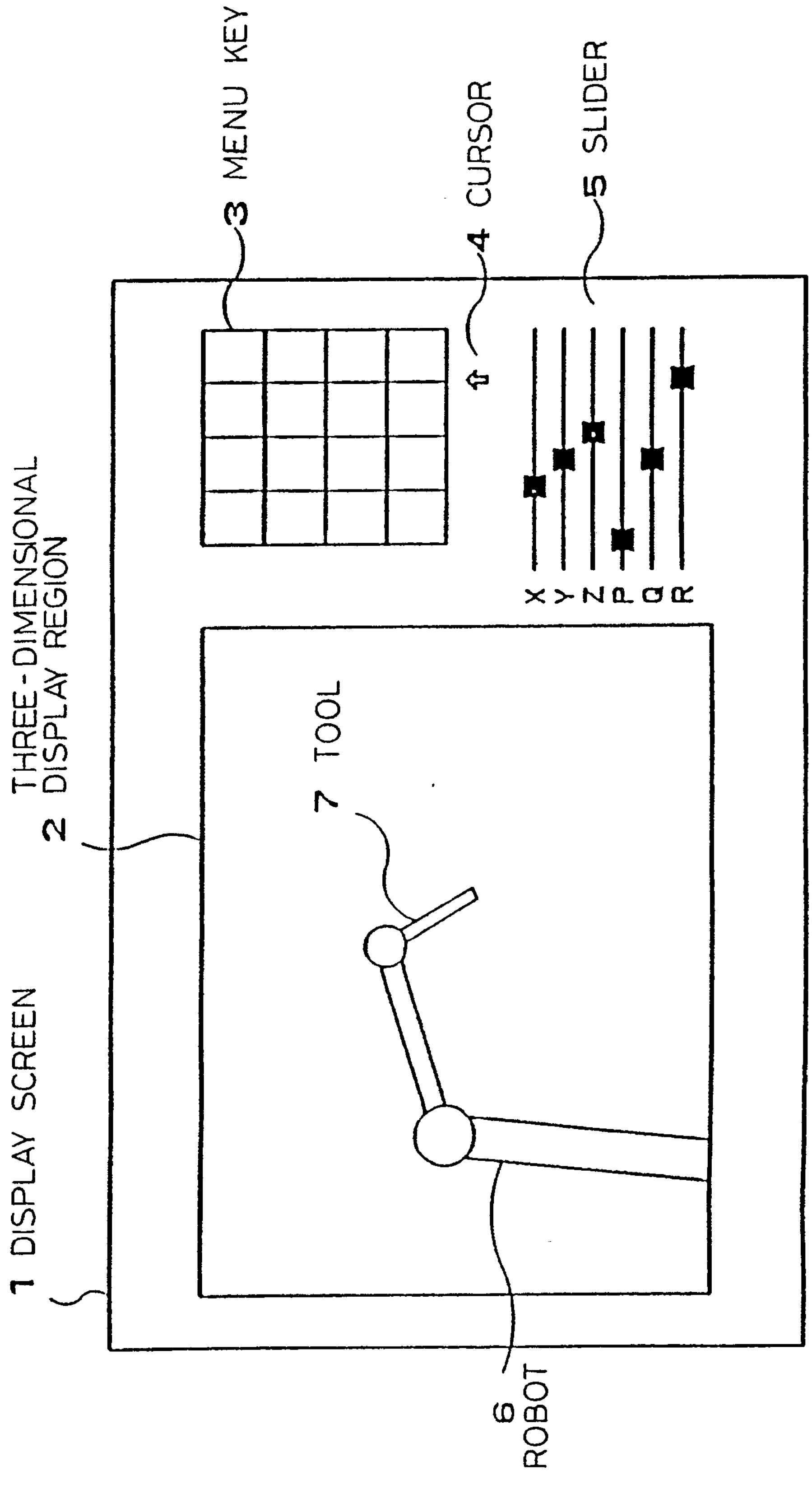
1 DISPLAY SCREEN
2 THREE-DIMENSIONAL DISPLAY REGION
3 MENU KEY
4 CURSOR
5 SLIDER
6 ROBOT
7 TOOL
X
Y
Z
P
Q
R

FIG. 9

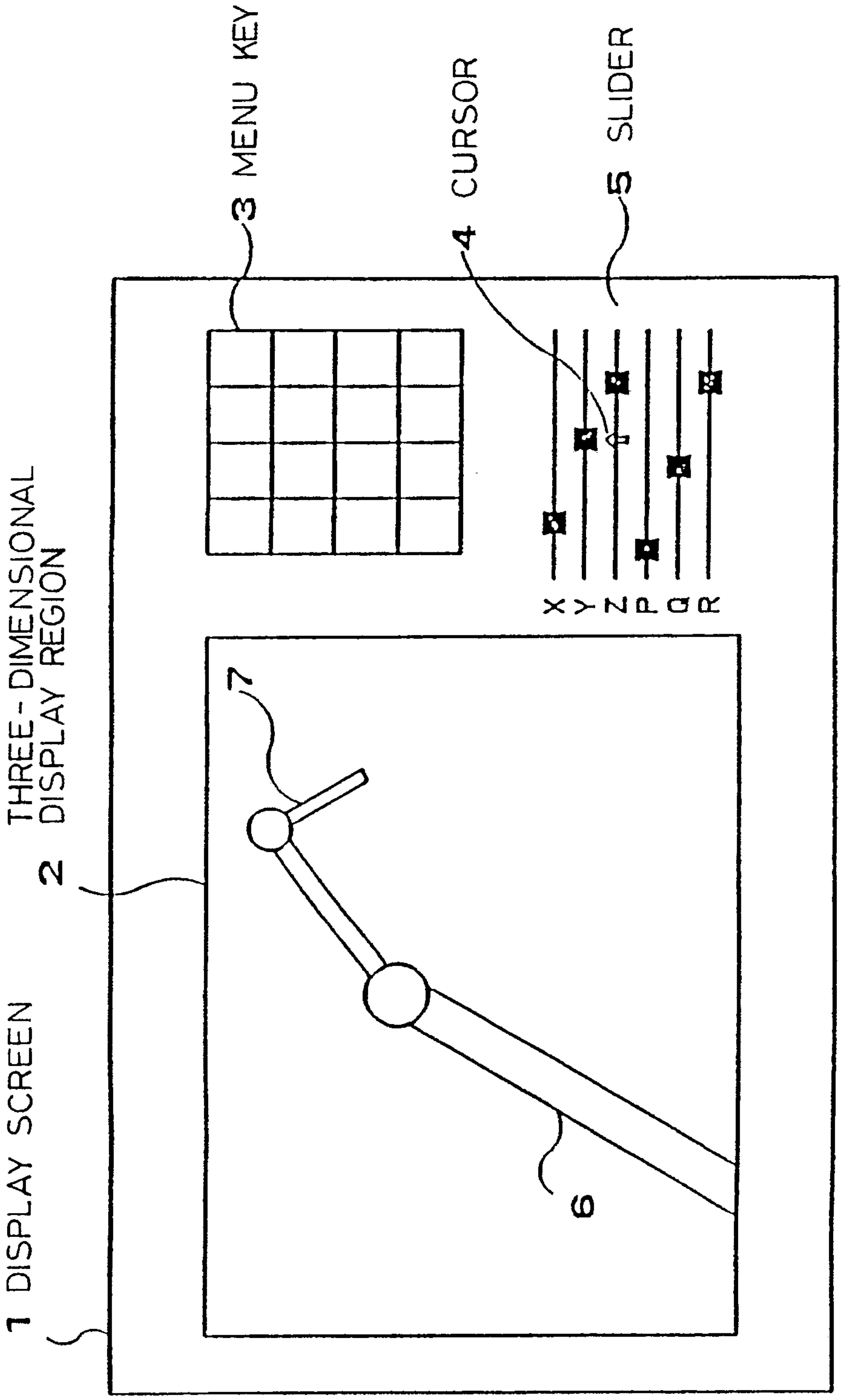
1 DISPLAY SCREEN
2 THREE-DIMENSIONAL DISPLAY REGION
3 MENU KEY
4 CURSOR
5 SLIDER
X
Y
Z
P
Q
R
6
7

FIG. 10

# INTERNATIONAL SEARCH REPORT

International Application No PCT/JP90/01463

**I. CLASSIFICATION OF SUBJECT MATTER** (if several classification symbols apply, indicate all) [6]

According to International Patent Classification (IPC) or to both National Classification and IPC

Int. $Cl^5$ G09G5/08

**II. FIELDS SEARCHED**

Minimum Documentation Searched [7]

| Classification System | Classification Symbols |
| --- | --- |
| IPC | G09G5/08 |

Documentation Searched other than Minimum Documentation to the Extent that such Documents are Included in the Fields Searched [8]

Kokai Jitsuyo Shinan Koho 1971 - 1989

**III. DOCUMENTS CONSIDERED TO BE RELEVANT** [9]

| Category [*] | Citation of Document, [11] with indication, where appropriate, of the relevant passages [12] | Relevant to Claim No. [13] |
| --- | --- | --- |
| X | JP, A, 62-209481 (Mitsubishi Electric Corp.), September 14, 1987 (14. 09. 87), Fig. 4 (Family: none) | 1-9 |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

**IV. CERTIFICATION**

| Date of the Actual Completion of the International Search | Date of Mailing of this International Search Report |
| --- | --- |
| December 27, 1990 (27. 12. 90) | January 28, 1991 (28. 01. 91) |
| **International Searching Authority** | **Signature of Authorized Officer** |
| Japanese Patent Office | |